# EUROPÄISCHE PATENTSCHRIFT

(11) **EP 3 857 096 B1**
(45) Veröffentlichungstag und Bekanntmachung des Hinweises auf die Patenterteilung: **07.01.2026**
(21) Anmeldenummer: 19758713.2
(22) Anmeldetag: 22.08.2019
(51) Int. Cl.: F16H 57/029, F16H 63/34

(54) **ELEKTROMECHANISCHE PARKSPERRE**
ELECTROMECHANICAL PARK LOCK
VERROUILLAGE DE STATIONNEMENT ÉLECTROMÉCANIQUE

(30) Priorität: 28.09.2018 DE 102018216728
(43) Veröffentlichungstag der Anmeldung: 04.08.2021
(73) Patentinhaber: Robert Bosch GmbH, 70442 Stuttgart (DE)
(72) Erfinder: WETZEL, Gerhard, 70825 Korntal-Muenchingen (DE); FERLINZ, Linus, 53111 Bonn (DE)
(86) Internationale Anmeldenummer: PCT/EP2019/072485
(87) Internationale Veröffentlichungsnummer: WO 2020/064232

(56) Entgegenhaltungen:
- EP-A1- 3 333 463
- EP-A2- 2 264 335
- FR-B1- 2 810 422
- FR-B1- 2 810 422
- US-A- 5 827 149
- US-A- 5 827 149
- US-A1- 2011 290 615

## Beschreibung

### Technisches Gebiet

Die Erfindung bezieht sich auf eine elektromechanisch betätigte Parksperre, die sich durch eine besonders kompakte Bauweise auszeichnet.

### Stand der Technik

DE 10 2011 080 972 A1 bezieht sich auf eine Sperreinrichtung. Die Sperreinrichtung dient zur Verriegelung eines elektrischen Antriebes, bei dem es sich um einen elektrischen Fahrzeugantrieb handelt. Die Sperreinrichtung umfasst ein drehbar angeordnetes Rad, welches erste Formschlusselemente aufweist, ferner ein Rastelement, das ein zweites Formschlusselement aufweist. Dieses greift in einem Verriegelungszustand formschlüssig in mindestens eines der ersten Formschlusselemente ein, so dass das Rad blockiert und in einem entriegelten Zustand außer Eingriff in Bezug auf das Rad steht. Die Sperreinrichtung ist hier als separate Einheit ausgebildet, welche in einem eigenen Gehäuse untergebracht ist.

DE 10 2011 086 547 A1 hat eine Parksperre zum Gegenstand. Die Parksperre weist eine um eine Drehachse verschwenkbare Sperrklinke auf, mit einem Zinkenzahn zum Eingriff in eine Sperrverzahnung. Ferner ist eine mit der Sperrklinke mechanisch koppelbare Betätigungseinheit vorgesehen, über die der Klinkenzahn gegen die Sperrverzahnung reversibel in Eingriff bringbar ist und durch einen Aktuator beaufschlagt ist. Das Getriebe weist ein Getriebegehäuse mit einer Öffnung auf, in die die separat vom Getriebegehäuse gefertigte Parksperre als Baueinheit derart eingesetzt wird, dass sie die Öffnung als ein Teil des Getriebegehäuses zumindest teilweise verschließt.

DE 10 2012 210 571 A1 hat eine Vorrichtung zum Betätigen eines Verriegelungsmechanismus' zum Gegenstand. Die Vorrichtung weist eine in axialer Richtung verschiebbar angeordnete Kolbeneinheit auf, ferner eine in einer zu einem geöffneten Zustand des Verriegelungsmechanismus äquivalenten axialen Position der Kolbeneinheit selbsttätig aktivierende Rasteinrichtung. Diese dient zum Halten der Kolbeneinheit in der zu dem geöffneten Zustand des Verriegelungsmechanismus' äquivalenten axialen Position. Ferner ist eine Betätigungseinrichtung zum Betätigen eines Löseelementes vorgesehen, welches zur Deaktivierung der Rasteinrichtung dient. Die Rasteinrichtung ist zum Halten der Kolbeneinheit in einer zu einem geschlossenen Zustand des Verriegelungsmechanismus äquivalenten axialen Position selbsttätig aktivierend ausgeführt. Zur Freigabe einer Bewegung der Kolbeneinheit ausgehend von der zum geschlossenen Zustand des Verriegelungsmechanismus äquivalenten axialen Position in Richtung zum geöffneten Zustand des Verriegelungsmechanismus ist diese in einer äquivalenten axialen Position deaktivierbar.

DE 10 2012 004 395 A1 bezieht sich auf eine Parksperrenanordnung, ein Getriebe und ein Kraftfahrzeug. Es ist ein drehfest mit einer Getriebewelle gekoppeltes Parksperrenzahnrad vorgesehen. Ferner ist eine parallel zur Parksperrenzahnradebene schwenkbar an einem Getriebegehäuse gelagerte und einen Sperrhaken tragende Sperrklinke, die zwischen einer ersten Schwenkstellung, in der der Sperrhaken radial außerhalb der Zähne des Parksperrenzahnrades positioniert ist, und einer zweiten Schwenkstellung, in der der Sperrhaken zwischen zwei Zähne des Parksperrenzahnrades eingreift, vorgesehen. Eine parallel zur Parksperrenzahnradebene angelenkte Hebelanordnung ist mittels deren Sperrklinke von der ersten in die zweite Schwenkstellung überführbar. Die Sperrklinke ist am freien Ende des Koppelschenkels eines Kniehebels angelenkt, dessen Hauptschenkel in einem so bemessenen radialen Abstand von dem Parksperrenzahnrad am Getriebegehäuse angelenkt ist, dass eine Überführung des Kniehebels von einer gewinkelten Kniehebelstellung in eine gestreckte Kniehebelstellung die Überführung der Sperrklinke von der ersten in die zweite Schwenkstellung bewirkt.

Die US 2011/290615 A1 offenbart ein Getriebe mit einer in ein Getriebegehäuseteil des Getriebes integrierten Parksperre, die eine Übertragungsvorrichtung, eine Klinke und ein Parksperrenrad umfasst, wobei außerhalb des Getriebegehäuseteils ein elektromechanischer Aktor angeordnet ist, der an einer Schnittstelle am Getriebegehäuse zu der Übertragungsvorrichtung zentriert ist.

Aus der EP 3 333 463 A1 ist ein elektrischer Parksperrenaktuator zur Betätigung einer Parksperre in einem Kraftfahrzeug bekannt, wobei die Parksperre eine Übertragungsvorrichtung, eine Klinke und ein Parksperrenrad umfasst und wobei der elektrische Parksperrenaktuator außerhalb eines Getriebegehäuses der Übertragungsvorrichtung angeordnet ist.

Parksperren sind im Allgemeinen mechanische Vorrichtungen, die durch das mechanische Blockieren einer Getriebewelle das Wegrollen eines geparkten Fahrzeugs verhindern. Das Blockieren wird durch einen Formschluss zwischen einem Parksperrenrad und einer Klinke erzielt, wobei das Parksperrenrad drehfest mit einer Getriebewelle verbunden ist, welche über mehrere Zahnräder direkt mit mindestens einer Antriebsachse des Fahrzeugs verbunden ist. Die mechanische Vorrichtung einer Parksperre sorgt dafür, dass die Klinke in eine Lücke des Parksperrenrades gedrückt wird und dort gehalten wird, zum Beispiel gegen die Kraft, die durch das Parken des Fahrzeugs, beispielsweise an einem Hang, erzeugt wird.

### Darstellung der Erfindung

Erfindungsgemäß wird ein Getriebe vorgeschlagen, mit einer in einem Getriebegehäuse des Getriebes integrierten Parksperre, die eine Übertragungsvorrichtung, eine Klinke und ein Parksperrenrad umfasst. Außerhalb des Getriebegehäuses ist ein elektromechanischer Aktor angeordnet, der an einer Schnittstelle am Getriebegehäuse in Bezug auf die Übertragungsvorrichtung zentriert und dort gegen das Getriebegehäuse abgedichtet ist. Die Klinke der Parksperre und eine Umlenkung, welche die Kraft des Aktors auf eine der Klinke zugeordnetes Sperrelement überträgt, sind, bei voneinander abweichenden Kraftrichtungen der Kraft des Aktors von der Betätigungskraft des Sperrelementes an ein und derselben Lagerungsstelle gelagert. Bei der Lagerungsstelle für die Umlenkung und die Klinke kann es sich insbesondere um einen im Getriebegehäuse ausgebildeten Stehbolzen handeln. Die Kraft des Aktors wird durch eine Linearbewegung einer Zahnstange an die Umlenkung übertragen, diese überträgt eine Betätigungskraft an das Sperrelement unter einer von der Kraftrichtung der Kraft des Aktors verschiedenen Richtung. Die Übertragungsvorrichtung umfasst zur Übertragung der Kraft des elektromechanischen Aktors, der außerhalb des Getriebegehäuses angeordnet ist, ein Zahnrad und eine Zahnstange, wobei die Zahnstange über ein Koppelglied, beispielsweise ein Koppelblech die Umlenkung betätigt.

Der Vorteil bei der erfindungsgemäß vorgeschlagenen Lösung ist dadurch gegeben, dass eine Schnittstelle am Getriebegehäuse zu der Übertragungsvorrichtung als ein Zwischenstück ausgeführt ist, welches Dichtelemente einerseits und ein Wellenstück andererseits aufweist, derart, dass nach einer im Getriebegehäuse erfolgten Montage der Vorrichtung das Zwischenstück, das ein Wellenstück aufnimmt sowie der elektromechanische Aktor relativ zur zuerst montierten mechanischen Vorrichtung in idealer Weise zueinander zentriert werden können.

In Weiterbildung der erfindungsgemäß vorgeschlagenen Lösung ist das Zwischenstück gegen das Getriebegehäuse abgedichtet und nimmt eine Antriebswelle des elektromechanischen Aktors auf.

In vorteilhafter Weise weist das Zwischenstück eine Wellendichtung und einen Axialdichtring auf, die beide in das Zwischenstück eingelassen sind und an einem Wellenstück bzw. das Getriebegehäuse anliegen. In vorteilhafter Weise ist an der Baugruppe Zwischenstück die Funktion Abdichtung sowohl in Bezug auf das Getriebegehäuse als auch auf das rotierende Wellenstück implementiert.

Das Zwischenstück weist in vorteilhafter Weise das Wellenstück, den Wellendichtring sowie die Axialdichtung auf, so dass eine einfach, insbesondere im Rahmen einer schwimmenden Lagerung am Getriebegehäuse zu fixierende, Toleranzen ausgleichende Montagemöglichkeit gegeben ist.

In vorteilhafter Weise wird durch die Umlenkung die Kraft des Aktors um 90° gedreht an eine Schubstange übertragen, an der das die Klinke betätigende Sperrelement aufgenommen ist.

Insbesondere handelt es sich bei dem außerhalb des Getriebegehäuses montierten elektromechanischen Aktor um einen einfachen und kostengünstigen Elektromotor.

Schließlich bezieht sich die Erfindung auf eine Verwendung eines solchen Getriebes mit einer in einem Getriebegehäuse des Getriebes integrierten Parksperre in einem mindestens einen E-Antrieb aufweisenden elektrischen Fahrzeugs.

### Vorteile der Erfindung

Die erfindungsgemäß vorgeschlagene Lösung erlaubt in vorteilhafter Weise den Einsatz einer reduzierten Teileanzahl zur Implementierung der Parksperre innerhalb eines Getriebes. Ist beispielsweise ein Drehlager durch einen Stehbolzen im Getriebegehäuse gebildet, kann dieser gleichzeitig die dem Parksperrenrad zugeordnete Klinke und andererseits einen Umlenkhebel der Umlenkung aufnehmen. Damit ergibt sich insbesondere ein geringerer Aufwand bei der Montage. Es herrschen des Weiteren einfachere Toleranzverhältnisse, da bei der Montage des Getriebedeckels auf das Getriebegehäuse nur ein Stehbolzen in beide Teile gefügt werden muss und nicht mehrere, wie bei einer getrennten Lagerung für Klinke und für die Umlenkung. Des Weiteren kann durch den Einsatz einer kompaktbauenden Umlenkung beengten Bauraumverhältnissen bei einem Getriebegehäuse Rechnung getragen werden. Des Weiteren lässt sich durch die erfindungsgemäß vorgeschlagene Lösung insbesondere ein kompaktes Design einer Parksperrenfunktion erreichen.

Als weiterer Vorteil ist zu nennen, dass es sich bei dem elektromechanischen Aktor, der insbesondere außerhalb des Ölraums des Getriebegehäuses angeordnet ist, um einen einfachen, kostengünstigen Elektromotor handeln kann, der gegebenenfalls eine angebaute Elektronik umfasst. Aufgrund der Anordnung außerhalb des Ölraumes ist der E-Motor nicht öldicht auszuführen; ferner sind an diesen keine besonderen Anforderungen hinsichtlich einer Temperaturfestigkeit zu stellen, da dieser nicht innerhalb des Getriebegehäuses eingesetzt wird. Vielmehr kann der außen angebaute elektromechanische Aktor als undichter Aktor ausgeführt sein, und beispielsweise innerhalb einer Vertiefung, welche mit einem Deckel abgedichtet ist, untergebracht sein. Der Ausgleich von Lagetoleranzen zwischen den Parksperrenkomponenten innerhalb des Ölraumes und des außerhalb des Getriebegehäuses montierten elektromechanischen Aktors können beispielsweise dadurch ausgeglichen werden, dass sich die Antriebswelle des elektromechanischen Aktors an der Übertragungsvorrichtung, die im Inneren des Getriebegehäuses, d.h. im Ölraum angeordnet ist, um das Drehmoment des Aktors zu übertragen.

Um eine robuste Abdichtung zwischen den Komponenten der erfindungsgemäß vorgeschlagenen Parksperre zu erreichen, sind die Dichtungskomponenten in ein Zwischenstück eingesetzt. Dieses umfasst ein Wellenstück und wird bei der Montage an der im Getriebegehäuse montierten Übertragungsvorrichtung orientiert und ausgerichtet. Dadurch wird in vorteilhafter Weise erreicht, dass die Dichtungen ideal zentrisch ausgerichtet sind. Das Zwischenstück kann dann über eine Axialdichtung am Getriebegehäuse fixiert werden, beispielsweise mittels einer schwimmenden Lagerung. Damit lässt sich eine robuste Abdichtung mit optimaler Dichtungsfunktion erreichen, ebenso eine einfachere Montage, da Toleranzen ausgeglichen werden.

Durch die Anordnung des Aktors außerhalb des Ölraumes ist ein einfacher und sicherer Austausch des Aktors im Reparaturfalle möglich. Ein Öffnen des Getriebes mit Ölablassen und Wiederbefüllen mit Öl ist nicht mehr erforderlich.

Durch die Anordnung des Aktors innerhalb einer Vertiefung des Getriebegehäuses in Verbindung mit einem dicht abschließenden, stabilen Deckel, befinden sich der Aktor und die Anbauelektronik in einem geschützten Raum, welcher einen optimalen Schutz gegen Umwelteinflüsse bietet, wie beispielsweise Spritzwasser, Durchfahren von Wasserpfützen, Wasserdurchfahrten bei überfluteten Straßen (Kundenforderung Tauchdichtheit), Reinigung mit Hochdruckreiniger und mechanischen Belastungen, wie sie beim Aufsetzen eines Fahrzeugs auf Bodenunebenheiten oder durch Steinschlag entstehen. Ein wasserdichter elektromechanischer Aktor, der außen am Getriebegehäuse angeschraubt ist, könnte durch derartige mechanische Belastungen Schaden nehmen, abgerissen oder schwer beschädigt werden, insbesondere wenn es sich bei dem Fahrzeug um ein SUV handelt. Durch die Positionierung der Übertragungsvorrichtung im Ölraum über das System aus Stehbolzen und Bohrung (Passung) am Getriebegehäuse, ergibt sich eine kostengünstige und hochgenaue Position. Eine Bohrung mit Passung und ein Bolzen als Normteil können ohne größeren Aufwand im µm-Bereich fertigungstechnisch hergestellt werden.

### Kurze Beschreibung der Zeichnung

Anhand der Zeichnung wird die Erfindung nachstehend eingehender beschrieben.

Es zeigt:
- Figur 1: eine aus dem Stand der Technik bekannte Parkbremse,
- Figur 2: eine Darstellung der erfindungsgemäß vorgeschlagenen Parksperre mit außerhalb des Getriebegehäuses angeordneten Komponenten sowie mit in das Getriebegehäuse integrierten Komponenten,
- Figur 3: eine vergrößerte Darstellung des Zwischenstücks und
- Figur 4: eine teilweise geschnitten dargestellte Draufsicht auf ein Getriebe.

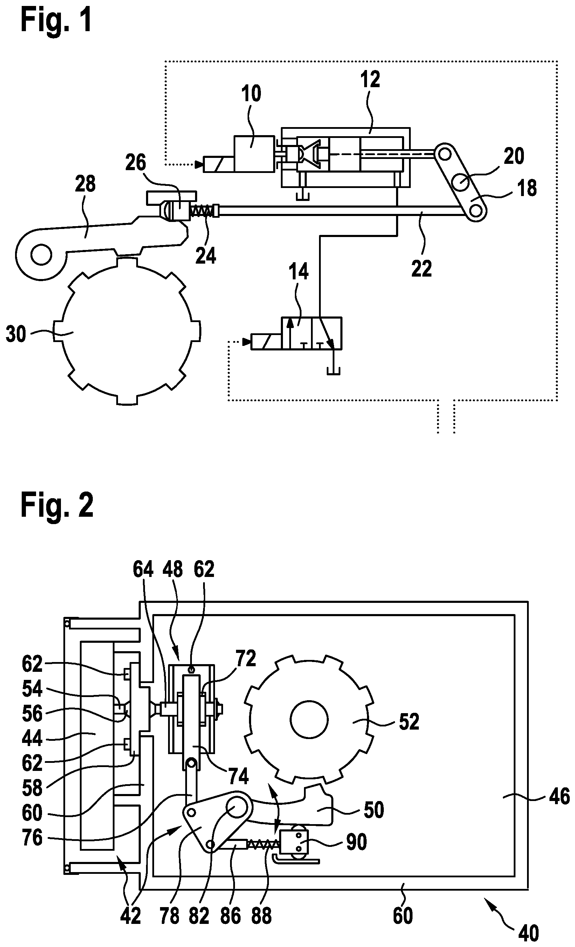

Figur 1 zeigt einen Sperrmagneten 10, der einem Hydraulikzylinder 12 zugeordnet ist. Der Hydraulikzylinder 12 betätigt einen Hebel und wird über hydraulisches Ventil 14 beaufschlagt. Der Hebel 18 ist etwa mittig an einem Hebellager 20 aufgenommen und um dieses drehbar. Über den Hydraulikzylinder 12 wird der Hebel 18 und das Hebellager 20 ausgelenkt und betätigt eine Schubstange 22 entgegen einer Vorspannkraft einer Feder 24. Die Schubstange 22 ist mit einem Sperrteil 26 versehen, welches wiederum eine Klinke 28 betätigt, die mit einem Parksperrenrad 30 zusammenwirkt.

### Ausführungsvarianten

Der Darstellung gemäß Figur 2 ist ein erfindungsgemäß vorgeschlagenes Getriebe 40 zu entnehmen. Dieses umfasst eine Parksperre 42, die über einen außerhalb eines Getriebegehäuses 60 angeordneten, vorzugsweise elektromechanischen Aktor 44 betätigt wird. Bei diesem handelt es sich um einen einfachen und kostengünstigen E-Motor, der nicht öldicht und nicht dicht gegen Umwelteinflüsse des Motorraumes auszuführen ist und der insbesondere keine erhöhten Anforderungen an die Temperaturfestigkeit zu erfüllen hat.

Wie aus der Darstellung gemäß Figur 2 hervorgeht, begrenzt das Getriebegehäuse 60 einen Ölraum 46. Innerhalb des Ölraumes befindet sich ein Parksperrenrad 52, dem eine Klinke 50 zugeordnet ist. Diese wird über eine vom elektromechanischen Aktor 44 beaufschlagte Übertragungsvorrichtung 48 betätigt.

Der elektromechanische Aktor 44 ist beispielsweise gemäß der Darstellung in Figur 2 außerhalb des Getriebegehäuses 60 angeordnet und liegt geschützt in einer Vertiefung, die mit einem Deckel dicht verschlossen ist und wirkt auf eine Antriebswelle 54. Die Antriebswelle 54 ist mit einer Zahnradwelle 64 unter Zwischenschaltung es Wellenstückes 56 verbunden. Die Übertragungsvorrichtung 48 ist durch Befestigungselemente 62 im Ölraum 46 des Getriebegehäuses 60 fixiert.

Die Übertragungsvorrichtung 48 umfasst ein auf der Zahnradwelle 64 aufgenommenes Zahnrad 72, welches auf eine Zahnstange 74 wirkt. Die Zahnstange 74 ist mit einem beispielsweise als Koppelblech ausgebildeten Koppelglied 76 verbunden.

Wie der Darstellung gemäß Figur 2 weiter zu entnehmen ist, betätigt das Koppelglied 76 eine Umlenkung 78, die an einem Drehlager 82 aufgenommen ist. Bei dem Drehlager 82 handelt es sich insbesondere um einen Stehbolzen, der im Getriebegehäuse 60 aufgenommen ist. Neben der Umlenkung 78 ist am Drehlager 82 gleichzeitig auch die Klinke 50 aufgenommen, welche in der Lage ist, sich um das Drehlager 82 entsprechend des Doppelpfeiles zu bewegen.

Des Weiteren ist die Umlenkung 78 mit einer Schubstange 86 verbunden, auf der sich eine Feder 88 befindet. Am Ende der Schubstange 86 befindet sich ein Sperrelement 90, welches beispielsweise zwei gegenüberliegende Rollen aufweist, von denen eine an einer Führung im Getriebegehäuse 60 anliegt und die andere die Klinke 50 berührt. Die Klinke 50 wird durch ihre Zahngeometrie beim Wegbewegen des Sperrelementes 90 aus dem Parksperrenrad 52 herausgedrängt, wobei diese Bewegung durch eine nicht dargestellte Rückstellfeder 92 unterstützt wird, die die Klinke 50 im ausgelegten Zustand auch in ihrer Lage derart fixiert, dass sie durch Erschütterung des Fahrzeugs nicht in Richtung Parksperrenrad 52 bewegt wird.

Bei der Betätigung des elektromechanischen Aktors 44, treibt dessen Antriebswelle 54 das Wellenstück 56, das im Zwischenstück 58 aufgenommen ist, an. Die Rotation des Wellenstückes 56 führt zu einer Drehbewegung der Zahnradwelle 64, an der wiederum das Zahnrad 72 aufgenommen ist. Die Verdrehung des Zahnrades 72 führt zu einer Vertikalbewegung der Zahnstange 74, die über das Koppelglied 76 an die Umlenkung 78 übertragen wird. Die Umlenkung 78 überträgt die im Wesentlichen vertikal verlaufende Bewegung des Koppelgliedes 76 in eine zu dieser um vorzugsweise 90° versetzte Kraftrichtung an eine Schubstange 86. An der Schubstange 86 ist das Sperrelement 90 aufgenommen, welches durch eine Feder 88 vorgespannt ist. Das Sperrelement 90 weist beispielsweise zwei einander gegenüberliegende Rollen auf, von denen eine die Klinke 50 berührt und die gegenüberliegende an einer Führung abrollt, die im Getriebegehäuse 60 ausgeführt ist.

Sowohl die Umlenkung 78 als auch die Klinke 50 sind an ein und demselben Drehlager 82, welches beispielsweise als ein in das Getriebegehäuse 60 eingelassener Stehbolzen ausgebildet ist, gelagert. Die Klinke 50 umfasst einen Fortsatz, der bei Betätigung des Sperrelementes 90 in Lücken eines Parksperrenrades 52 eingreift und dieses blockiert, so dass eine Drehung des Parksperrenrades 52 verhindert wird.

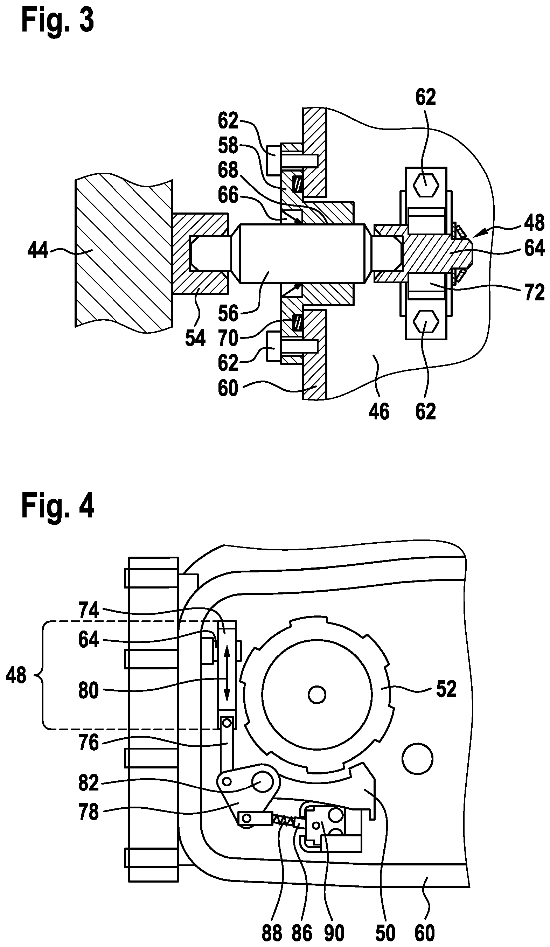

Figur 3 zeigt in vergrößerter Darstellung die Anordnung des Zwischenstücks am Getriebegehäuse 60. Wie aus Figur 3 hervorgeht, weist der elektromechanische Aktor 44 die Antriebswelle 54 auf. In diese ist ein Ende des Wellenstückes 56 drehfest eingesteckt, während dessen anderes Ende in eine entsprechend konfigurierte Öffnung einer Zahnradwelle 64 drehfest eingesteckt ist. Das Wellenstück 56 ist in einer Führungsplatte 68 geführt. Auf der Zahnradwelle 64 wiederum befindet sich ein Zahnrad 72, welches mit einer in Figur 3 nicht dargestellten Zahnstange 74 zusammenwirkt, vergleiche Darstellung gemäß der Figuren 2 oder 4.

Aus der vergrößerten Darstellung gemäß Figur 3 ergibt sich des Weiteren, dass die Übertragungsvorrichtung 48 durch hier beispielsweise als Schrauben ausgebildete Befestigungselemente 62 am Boden des Ölraumes 46 des Getriebegehäuses 60 befestigt ist.

Das Zwischenstück 58, welches das Wellenstück 56 aufnimmt, umfasst darüber hinaus einen in eine Ausnehmung eingelassenen Axialdichtring 70 sowie einen Wellendichtring 66. Der Wellendichtring 66 ist gegen die Oberseite des Wellenstücks 56 angestellt, während bei der Montage des Zwischenstückes 58 nach dessen Ausrichtung in Bezug auf die Position der Zahnradwelle 64 dieses durch Anziehen der Befestigungselemente 62 am Getriebegehäuse 60 befestigt wird. Da der Axialdichtring 70 komprimiert ist, ist das Zwischenstück 58 nach Montage gegen das Getriebegehäuse 60, insbesondere den innenliegenden Ölraum 46 abgedichtet.

Bei der Montage des erfindungsgemäß vorgeschlagenen Getriebes wird zunächst die Übertragungsvorrichtung 48 mit den Befestigungselementen 62 am Boden des Ölraums 46 befestigt. Anschließend wird von außen das Zwischenstück 58 bzw. das in dieser aufgenommene Wellenstück 56 in die Zahnradwelle 64 der Übertragungsvorrichtung 48 ausgerichtet und zentriert. Das Zwischenstück 58 wird in dieser ausgerichteten Position am Getriebegehäuse 60 dichtend fixiert, was durch Anziehen der Befestigungselemente 62 - hier als Schrauben ausgebildet - erfolgt. Anschließend wird der elektromechanische Aktor 44 auf das Wellenstück 56 drehfest gesteckt, beispielsweise mittels einer Torx-Verbindung und in Bezug auf das Getriebegehäuse 60 mit Befestigungselementen 62 fixiert. Somit orientieren sich sowohl das Zwischenstück 58 als auch der elektromechanische Aktor 44 an der zuerst innerhalb des Ölraumes 46 im Getriebegehäuse 60 des Getriebes 40 montierten Übertragungsvorrichtung 48 und sind in idealer Weise zueinander zentriert.

Wie aus Figur 3 weiter hervorgeht, befinden sich innerhalb des Zwischenstückes 58 sowohl der Wellendichtring 66 als auch der Axialdichtring 70. Die Lagerungsstelle sowie die Dichtfunktion sind demnach zentrisch zum Wellenstück 56 ausgerichtet und gewährleisten somit eine optimale Dichtfunktion. Die Lagetoleranzen zwischen dem Zwischenstück 58 einerseits und den Befestigungselementen 62, wird durch Spiel zwischen diesen ausgeglichen. Gleichzeitig wird der Axialdichtring 70 durch die Befestigungselemente 62 an das Getriebegehäuse 60 dichtend angepresst.

Wie aus der Darstellung gemäß Figur 4 hervorgeht, ist die Zahnradwelle 64 drehfest mit dem Zahnrad 72 verbunden. Das Zahnrad 72 wird durch den elektromechanischen Aktor 44, vergleiche Darstellung gemäß Figur 3, über die Antriebswelle 54 und das Wellenstück 56 angetrieben. Die Zahnstange 74 setzt die Drehbewegung des Zahnrades 72 in einer Linearbewegung 80 um und überträgt diese durch das Koppelglied 76 auf die Umlenkung 78. Diese ist der erfindungsgemäß vorgeschlagenen Lösung auf dem als Stehbolzen ausgebildeten, im Getriebegehäuse 60 angeordneten Drehlager 82 gelagert. Gleichzeitig ist die Drehlager 82 auch die Lagerung der Klinke 50. Hierdurch wird eine sehr kompakte Konstruktion ermöglicht, ferner ist eine Anpassung an äußerst begrenzte Umgebungen möglich. Die Umlenkung 78 überträgt ihre Bewegung auf die Schubstange 86 und diese wiederum an die Feder 88, die auf der Schubstange 86 angeordnet ist, und von dort auf das Sperrelement 90. Bei dem Sperrelement 90 handelt es sich um ein solches, welches beispielsweise zwei einander gegenüberliegende Rollen umfasst, von denen eine an einer Führung innerhalb des Getriebegehäuses 60 abrollt und die andere die Klinke 50 betätigt.

Durch Bewegung des Sperrelementes 90 nach rechts wird die Klinke 50 hochgedrückt und legt sich in eine Lücke am Umfang des Parksperrenrades 52 ein. Beim Zurückfahren des Sperrelementes 90 nach links wird die Klinke 50 freigegeben und diese wird durch eine nicht dargestellte Rückstellfeder 92 wieder nach unten gedrückt, d.h. gerät außer Eingriff mit dem Parksperrenrad 52, so dass dieses in Rotationsrichtung wieder freigegeben ist.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Getriebe (40) mit einer in ein Getriebegehäuse (60) des Getriebes (40) integrierten Parksperre (42), die eine Übertragungsvorrichtung (48), eine Klinke (50) und ein Parksperrenrad (52) umfasst, wobei außerhalb des Getriebegehäuses (60) ein elektromechanischer Aktor (44) angeordnet ist, der an einer Schnittstelle am Getriebegehäuse (60) zu der Übertragungsvorrichtung (48) zentriert und dort gegen das Getriebegehäuse (60) abgedichtet ist, **dadurch gekennzeichnet, dass** die Klinke (50) der Parksperre (42) und eine Umlenkung (78), welche die Kraft des elektromechanischen Aktors (44) auf ein der Klinke (50) zugeordnetes Sperrelement (90) überträgt, bei voneinander abweichenden Kraftrichtungen der Kraft des Aktors (44) von der Betätigungskraft des Sperrelementes (90), an ein und demselben Drehlager (82) gelagert sind.

2. Getriebe (40) gemäß Anspruch 1, **dadurch gekennzeichnet, dass** die Schnittstelle als Zwischenstück (58) ausgebildet ist, das gegen das Getriebegehäuse (60) abgedichtet ist und eine Antriebswelle (54) des elektromechanischen Aktors (44) aufnimmt.

3. Getriebe (40) gemäß Anspruch 2, **dadurch gekennzeichnet, dass** das Zwischenstück (58) einen Wellendichtring (66) und einen Axialdichtring (70) aufweist, die beide in das Zwischenstück (58) eingelassen sind und an ein Wellenstück (56) bzw. das Getriebegehäuse (60) angestellt sind, wobei ein Ende des Wellenstücks (56) drehfest in die Antriebswelle (54) eingesteckt ist und das andere Ende des Wellenstücks (56) in eine entsprechend konfigurierte Öffnung einer Zahnradwelle (64) eingesteckt ist, wobei das Wellenstück (56) in einer Führungsplatte (68) des Zwischenstücks (58) geführt ist.

4. Getriebe (40) gemäß Anspruch 3, **dadurch gekennzeichnet, dass** das Zwischenstück (58) mit Wellenstück (56), Axialdichtring (70) und Wellendichtring (66) am Getriebegehäuse (60) in Bezug auf die Zahnradwelle (64) der Übertragungsvorrichtung (48) zentriert ist.

5. Getriebe (40) gemäß Anspruch 1, **dadurch gekennzeichnet, dass** die Kraft des elektromechanischen Aktors (44) durch eine Linearbewegung (80) einer Zahnstange (74) an die Umlenkung (78) übertragen wird und diese eine Betätigungskraft an das Sperrelement (90) unter einer von der Kraftrichtung der Kraft des Aktors (44) verschiedenen Richtung überträgt.

6. Getriebe (40) gemäß Anspruch 5, **dadurch gekennzeichnet, dass** die Kraftrichtung der Kraft des elektromechanischen Aktors (44) lotrecht zur Betätigungskraft des Spannelementes (90) steht.

7. Getriebe (40) gemäß Anspruch 1, **dadurch gekennzeichnet, dass** die Übertragungsvorrichtung (48) ein Zahnrad (72) und eine Zahnstange (74) umfasst, die über ein Koppelglied (76) die Umlenkung (78) betätigen.

8. Getriebe (40) gemäß Anspruch 1, **dadurch gekennzeichnet, dass** die Umlenkung (78) die Kraft des elektromechanischen Aktors (44) um 90° versetzt an eine Schubstange (86) überträgt, an der das die Klinke (50) betätigende Sperrelement (90) aufgenommen ist.

9. Getriebe (40) gemäß Anspruch 1, **dadurch gekennzeichnet, dass** der elektromechanische Aktor (44) ein Elektromotor ist.

10. Verwendung des Getriebes (40) mit einer in einem Getriebegehäuse (60) des Getriebes (40) integrierten Parksperre (42) nach einem der Ansprüche 1 bis 9 in einem mindestens einen E-Antrieb aufweisenden Fahrzeug.

## Claims

1. Gearbox (40) having a parking lock (42) which is integrated in a gearbox housing (60) of the gearbox (40) and comprises a transfer device (48), a detent (50) and a parking lock gear (52), wherein an electromechanical actuator (44) is arranged outside the gearbox housing (60), which actuator is centred with respect to the transfer device (48) on an interface on the gearbox housing (60) and is sealed off from the gearbox housing (60) there, **characterized in that** the detent (50) of the parking lock (42) and a deflection means (78), which transfers the force of the electromechanical actuator (44) to a locking element (90) associated with the detent (50), are mounted on one and the same pivot bearing (82) with mutually deviating force directions of the force of the actuator (44) and the actuating force of the locking element (90).

2. Gearbox (40) according to Claim 1, **characterized in that** the interface is formed as an intermediate piece (58) which is sealed off from the gearbox housing (60) and accommodates a drive shaft (54) of the electromechanical actuator (44).

3. Gearbox (40) according to Claim 2, **characterized in that** the intermediate piece (58) has a shaft sealing ring (66) and an axial sealing ring (70), which are both incorporated in the intermediate piece (58) and are positioned against a shaft piece (56) and the gearbox housing (60) respectively, wherein one end of the shaft piece (56) is inserted in a torsion-resistant manner into the drive shaft (54) and the other end of the shaft piece (56) is inserted into a correspondingly configured opening in a gear wheel shaft (64), wherein the shaft piece (56) is guided in a guide plate (68) of the intermediate piece (58).

4. Gearbox (40) according to Claim 3, **characterized in that** the intermediate piece (58) with the shaft piece (56), axial sealing ring (70) and shaft sealing ring (66) is centred in relation to the gear wheel shaft (64) of the transfer device (48) on the gearbox housing (60).

5. Gearbox (40) according to Claim 1, **characterized in that** the force of the electromechanical actuator (44) is transferred to the deflection means (78) via a linear movement (80) of a rack (74) and this deflection means transfers an actuating force to the locking element (90) in a direction which differs from the force direction of the force of the actuator (44).

6. Gearbox (40) according to Claim 5, **characterized in that** the force direction of the force of the electromechanical actuator (44) is perpendicular to the actuating force of the clamping element (90).

7. Gearbox (40) according to Claim 1, **characterized in that** the transfer device (48) comprises a gear wheel (72) and a rack (74) which actuate the deflection means (78) via a coupling member (76).

8. Gearbox (40) according to Claim 1, **characterized in that** the deflection means (78) transfers the force of the electromechanical actuator (44) to a push rod (86), on which the locking element (90) actuating the detent (50) is accommodated, such that the said force is offset through 90°.

9. Gearbox (40) according to Claim 1, **characterized in that** the electromechanical actuator (44) is an electric motor.

10. Use of the gearbox (40) with a parking lock (42) integrated in a gearbox housing (60) of the gearbox (40) according to one of Claims 1 to 9 in a vehicle having at least one electric drive.

## Revendications

1. Transmission (40) présentant une sécurité de stationnement (42) intégrée dans une boîte de transmission (60) de la transmission (40), comprenant un dispositif de transmission (48), un cliquet (50) et une roue de sécurité de stationnement (52), un actionneur électromécanique (44) étant agencé à l'extérieur de la boîte de transmission (60), qui est centré au niveau d'une interface sur la boîte de transmission (60) par rapport au dispositif de transmission (48) et fermé de manière étanche par rapport à la boîte de transmission (60), **caractérisée en ce que** le cliquet (50) de la sécurité de stationnement (42) et un renvoi (78), qui transmet la force de l'actionneur électromécanique (44) à un élément de sécurité (90) associé au cliquet (50), dans le cas de directions de force s'écartant l'une de l'autre de la force de l'actionneur (44) et de la force d'actionnement de l'élément de sécurité (90), sont logés sur un seul et même palier rotatif (82).

2. Transmission (40) selon la revendication 1, **caractérisée en ce que** l'interface est conçue comme une pièce intermédiaire (58) qui est fermée de manière étanche par rapport à la boîte de transmission (60) et qui reçoit un arbre d'entraînement (54) de l'actionneur électromécanique (44).

3. Transmission (40) selon la revendication 2, **caractérisée en ce que** la pièce intermédiaire (58) présente une bague d'étanchéité (66) pour arbre et une bague d'étanchéité axiale (70) qui sont toutes les deux introduites dans la pièce intermédiaire (58) et placées sur une partie (56) d'arbre ou, selon le cas, sur la boîte de transmission (60), une extrémité de la partie (56) d'arbre étant insérée de manière solidaire en rotation dans l'arbre d'entraînement (54) et l'autre extrémité de la partie (56) d'arbre étant insérée dans une ouverture conçue de manière correspondante d'un arbre d'engrenage (64), la partie (56) d'arbre étant guidée dans une plaque de guidage (68) de la pièce intermédiaire (58).

4. Transmission (40) selon la revendication 3, **caractérisée en ce que** la pièce intermédiaire (58) est centrée à l'aide de la partie (56) d'arbre, du joint d'étanchéité axial (70) et du joint d'étanchéité (66) pour arbre sur la boîte de transmission (60) par rapport à l'arbre d'engrenage (64) du dispositif de transmission (48).

5. Transmission (40) selon la revendication 1, **caractérisée en ce que en ce que** la force de l'actionneur électromécanique (44) est transmise par un déplacement linéaire (80) d'une crémaillère (74) au renvoi (78) et celui-ci transmet une force d'actionnement à l'élément de sécurité (90) dans une direction différente de la direction de la force de l'actionneur (44).

6. Transmission (40) selon la revendication 5, **caractérisée en ce que** la direction de la force de l'actionneur électromécanique (44) est perpendiculaire à la direction d'actionnement de l'élément de sécurité (90).

7. Transmission (40) selon la revendication 1, **caractérisée en ce que** le dispositif de transmission (48) présente une roue dentée (72) et une crémaillère (74), qui actionnent le renvoi (78) par l'intermédiaire d'un organe d'accouplement (76).

8. Transmission (40) selon la revendication 1, **caractérisée en ce que** le renvoi (78) transmet la force de l'actionneur électromécanique (44) de manière décalée de 90° à un tige de poussée (86) sur laquelle est logé l'élément de sécurité (90) actionnant le cliquet (50).

9. Transmission (40) selon la revendication 1, **caractérisée en ce que** l'actionneur électromécanique (44) est un moteur électrique.

10. Utilisation de la transmission (40) présentant une sécurité de stationnement (42) intégrée dans une boîte de transmission (60) de la transmission (40) selon l'une des revendications 1 à 9 dans un véhicule présentant au moins un entraînement électrique.
